# EUROPEAN PATENT APPLICATION

(11) **EP 2 166 426 A2**
(43) Date of publication of application: **24.03.2010**
(21) Application number: 09011728.4
(22) Date of filing: 14.09.2009
(51) Int. Cl.: G06F 1/04

(54) **Clock supply device**

(30) Priority: 18.09.2008 JP 2008238953
(71) Applicant: NEC Electronics Corporation, Kawasaki, Kanagawa 211-8668 (JP)
(72) Inventor: Tokue, Tatsuya, Kawasaki Kanagawa 211-8668 (JP)
(74) Representative: Glawe, Delfs, Moll

(57) **Abstract**

Provided is a clock supply device that variably adjusts a frequency of a clock supplied to each module, as needed. The clock supply device includes a clock output unit that switches between clocks having different frequencies and output the clocks; a clock distribution unit that distributes and supplies the clocks from the clock output unit to the plurality of modules; and a clock switching control unit that causes the frequencies of the clocks from the clock output unit to be switched. The clock switching control unit includes a clock request pattern determination unit. The clock request pattern determination unit outputs a control signal for decreasing a clock frequency to a slow frequency, to the clock output unit, when a pattern of a clock request signal output from a monitoring target module satisfies a predetermined condition pattern.

## Description

### BACKGROUND

### 1. Field of the Invention

The present invention relates to a clock supply device that variably adjusts a frequency of a clock supplied to each module of a computer system, as needed.

### 2. Description of Related Art

Heretofore, there has been known a configuration in which a clock is supplied only to a module issuing a clock request and the supply of a clock to a macro which need not be supplied with a clock is stopped in order to save power consumed by a computer system (e.g., Japanese Unexamined Patent Application Publication No. 2005-250650).

Further, as a power management function, there has been known a system for appropriately controlling power consumption by increasing or decreasing an operation clock frequency according to a load on system processing or the like (e.g., Japanese Unexamined Patent Application Publication No. 09-237132).

However, such a simple ON/OFF control as disclosed in Japanese Unexamined Patent Application Publication No. 2005-250650 is not sufficient to eliminate the waste of power due to an unnecessary supply of a high-speed clock during an operation at low load.

For example, some modules are required to constantly operate in an ON state, and even though the load thereof is small, a clock is supplied as usual to such macros. As a result, power is constantly consumed.

Further, Japanese Unexamined Patent Application Publication No. 09-237132 discloses an idea of setting and adjusting a clock frequency at four levels depending on the load and heat generation of a CPU and the remaining capacity of a battery.

Although the idea of changing the clock frequency according to the load on a system is disclosed, the method of changing the clock frequency according to the load state of the CPU lacks specificity.

Japanese Unexamined Patent Application Publication No. 09-237132 discloses a technique in which a flag indicating a busy state is set each time the CPU inputs/outputs or accesses a memory, and the number of flags is counted to recognize the number of idle states of the CPU, thereby detecting the load state of the CPU (see the paragraph [0017] of Japanese Unexamined Patent Application Publication No. 09-237132).

The present inventor has found a problem that the granularity of the control is too coarse to estimate the load on the entire system by monitoring only the operation of the CPU, and many other modules constituting the system are not taken into consideration. This causes such inconveniences that the high-speed clock is unnecessarily supplied throughout the entire system, or the clock frequency is decreased even when some modules require high-speed operation.

Further, a polling operation is executed at predetermined cycles even when the CPU is in the idle state, and therefore, the input/output and the access to a memory are made all the time. This causes a problem that, even when the number of inputs/outputs and the number of memory access operations are counted, it is virtually impossible to estimate the real load on the CPU and the real load on the entire system with high precision.

Accordingly, it is extremely difficult to apply the invention disclosed in Japanese Unexamined Patent Application Publication No. 09-237132 to an actual computer system.

A first exemplary aspect of an embodiment of the present invention is a clock supply device that supplies a clock to a plurality of modules, including: a clock output unit that switches between clocks having different frequencies and output the clocks; a clock distribution unit that distributes and supplies the clocks from the clock output unit to the plurality of modules; and a clock switching control unit that causes the frequencies of the clocks from the clock output unit to be switched. In the clock supply device, the clock switching control unit includes a clock request pattern determination unit that outputs a control signal for decreasing a clock frequency to a slow frequency, to the clock output unit, when a pattern of a clock request signal output from a monitoring target module selected as a monitoring target from among the plurality of modules satisfies a predetermined condition pattern.

According to an exemplary embodiment of the present invention, when modules suitable for determining the amount of load on a system is selected and the clock requests from these modules satisfy a predetermined condition (e.g., a condition in which all the clock requests from the selected mode become "L" level), the clock frequency is decreased to a slow frequency.

Thus, the load on the system can be estimated with high precision. As a result, necessary tasks are executed appropriately, and power overhead can be minimized and power consumption can be reduced.

### BRIEF DESCRIPTION OF THE DRAWINGS

The above and other exemplary aspects, advantages and features will be more apparent from the following description of certain exemplary embodiments taken in conjunction with the accompanying drawings, in which:
Fig. 1 is a diagram showing the overall configuration of a computer system;
Fig. 2 is a table showing a configuration example of a condition setting register;
Fig. 3 is a timing diagram showing operation timing of a DRAM;
Fig. 4 is a timing diagram showing a relationship between a bus operation rate and a clock frequency;
Fig. 5 is a flowchart showing an operation procedure of a clock frequency control method carried out by a clock supply unit;
Fig. 6 is a diagram showing the configuration of a first modification of the present invention;
Fig. 7 is a timing diagram showing a relationship between a FIFO buffer remaining capacity and a clock frequency in the first modification; and
Fig. 8 is a flowchart showing an operation procedure of the first modification.

### DETAILED DESCRIPTION OF THE EXEMPLARY EMBODIMENTS

Exemplary embodiments of the present invention are illustrated and described with reference to reference symbols given to the constituent elements in the drawings.

### (First exemplary embodiment)

A clock supply device according to a first exemplary embodiment of the present invention will be described.

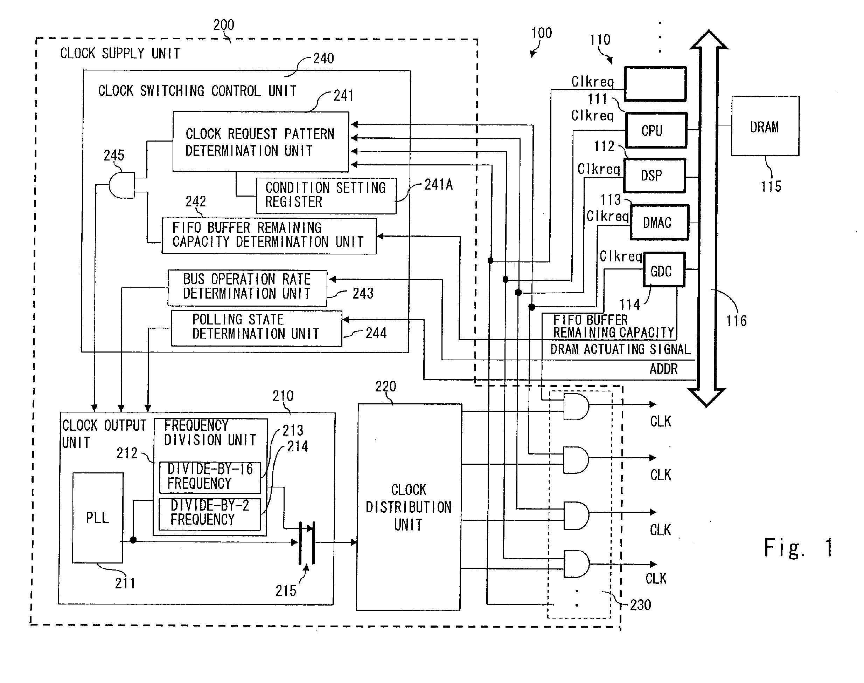

Fig. 1 is a diagram showing the overall configuration of a computer system 100.

The computer system 100 includes an operation execution unit 110 and a clock supply unit (clock supply device) 200.

The operation execution unit 110 includes a central processing unit (CPU) 111, a digital signal processor (DSP) 112, a direct memory access controller (DMAC) 113, a graphic display controller (GDC) 114, a dynamic random access memory (DRAM) 115, and a bus 116 for connecting these components together.

The operation of each of modules (111 to 115) mounted in the operation execution unit 110 requires a clock signal for providing a duty cycle. Accordingly, each of the modules (111 to 115) causes a clock request signal (Clkreq) to rise during the operation, and causes the clock request signal to fall during the time when the operation is stopped.

Note that a description of other modules is omitted herein and in the drawings, but other modules are mounted, if necessary.

The clock supply unit 200 supplies a clock to the operation execution unit 110.

The clock supply unit 200 includes a clock output unit 210, a clock distribution unit 220, a gate unit 230, and a clock switching control unit 240.

The clock output unit 210 includes a PLL 211, a frequency division unit 212, and a switching unit 215.

The PLL 211 multiplies a basic clock that is externally supplied, to thereby generate a high-speed clock.

The frequency division unit 212 divides the frequency of the high-speed clock from the PLL 211 at a predetermined frequency dividing rate.

The frequency division unit 212 includes a divide-by-16 frequency division unit 213 for dividing the frequency of the high-speed clock from the PLL 211 by 16 to thereby obtain a low-speed clock, and a divide-by-2 frequency division unit 214 for dividing the frequency of the clock by 2 to thereby obtain a medium-speed clock.

The switching unit 215 switches between the high-speed clock from the PLL 211 and the low-speed clock from the frequency division unit 212, and outputs the clocks. The switching unit 215 performs switching control in response to a control signal from the clock switching control unit 240.

The clock distribution unit 220 receives a clock signal from the clock output unit 210. Then, the clock distribution unit 220 generates a plurality of clocks to be distributed to the modules (111 to 115) in synchronization with the received clock, and outputs the plurality of clock signals.

The gate unit 230 includes a plurality of AND circuits.

The AND circuits are provided to respectively correspond to the modules (111 to 115).

One input of each of the AND circuits receives the clock request signal from each of the modules (111 to 115), and the other input of each of the AND circuits receives the clock signal from the clock distribution unit 220.

With this configuration, only modules that have caused the clock request signal to rise to "H" level among the modules (111 to 115) are supplied with the clock signal.

Next, the clock switching control unit 240 will be described.

The clock switching control unit 240 includes a clock request pattern determination unit 241, a FIFO buffer remaining capacity determination unit 242, a bus operation rate determination unit 243, and a polling state determination unit 244.

The clock request pattern determination unit 241 receives the clock request signal Clkreq from each of the modules (111 to 115).

The clock request pattern determination unit 241 monitors the presence or absence of the clock request from each of the modules (111 to 115), and compares a pattern indicating the presence or absence of the clock request with a predetermined condition pattern.

In this case, the clock request pattern determination unit 241 is provided with a condition setting register 241A.

The condition setting register 241A has registered therein in advance the identification codes of the plurality of modules (111 to 115), and is configured to be able to selectively set a module to be monitored.

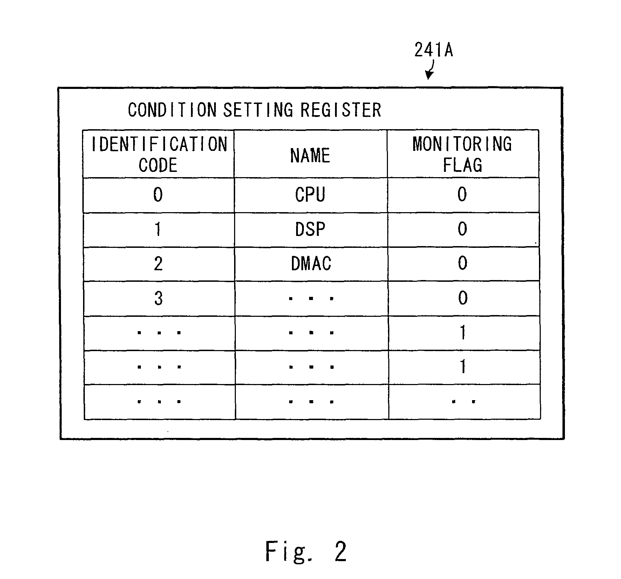

Fig. 2 is a table showing a configuration example of the condition setting register 241A.

The condition setting register 241A has module names registered therein, and is configured to be able to arbitrarily set a monitoring flag to "0" or "1".

In an example shown in Fig. 2, the monitoring flag is set to "0" as an initial value. When the monitoring flag indicates "0", the module is set as a monitoring target, and when the monitoring flag is set to "1 ", the module can be selectively set to be excluded from the monitoring target.

Further, when the clock request signals from all the monitoring target modules (monitoring flag of which is set to "0") are at "L" level, the clock request pattern determination unit 241 determines that the condition is satisfied, and outputs a control signal for dividing the clock frequency by 16.

The FIFO buffer remaining capacity determination unit 242 monitors the FIFO buffer remaining capacity of a FIFO type module that processes data in order from the top.

The FIFO buffer remaining capacity determination unit 242 has a threshold set therein. When the value of the FIFO buffer remaining capacity exceeds the threshold, the FIFO buffer remaining capacity determination unit 242 determines that the value of the FIFO buffer remaining capacity is within a safe zone, and outputs a control signal for dividing the clock frequency by 16.

The graphic display controller (GDC) 114 is one example of the FIFO type module.

The clock request signal Clkreq from the graphic display controller (GDC) 114 is not input to the clock request pattern determination unit 241, but the value of the FIFO buffer remaining capacity is monitored by the FIFO buffer remaining capacity determination unit 242.

The determination result from the clock request pattern determination unit 241 and the determination result from the FIFO buffer remaining capacity determination unit 242 are further determined by an AND circuit 245 under an AND condition. When both conditions are satisfied, a switching control signal for causing a divided-by-16 clock, i.e., the lowest-speed clock to be output is supplied to the clock output unit 210.

Upon receiving the switching control signal, the clock output unit 210 generates a divided-by-16 clock using the frequency division unit 212, and the switching unit 215 performs switching operation to cause the divided-by-16 clock from the frequency division unit 212 to be output.

The bus operation rate determination unit 243 monitors the operation rate of the bus 116, and controls the clock frequency to be increased, maintained, or decreased according to the operation rate of the bus 116 per unit time.

The bus operation rate determination unit 243 receives a signal for detecting an active state of each of an address bus and a data bus of the bus 116.

Specifically, the bus operation rate is estimated based on an active time of the DRAM 115 per unit time.

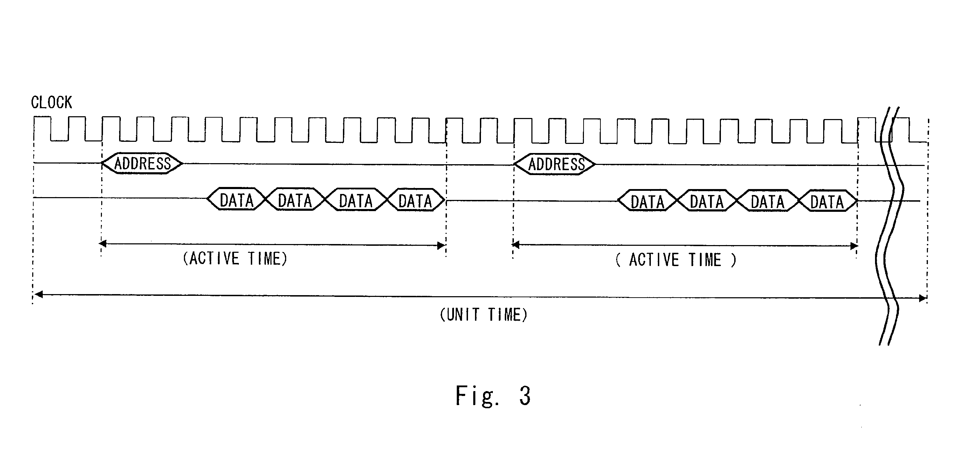

Fig. 3 is a timing diagram showing operation timing of the DRAM 115.

As shown in Fig. 3, in response to an input of a readout start address, data is output in synchronization with the clock.

The active time of the DRAM 115 is defined as a time period from the input of an address, i.e., the start of a protocol, until the end of data, i.e., the end of the protocol.

A ratio of the active time to the unit time is obtained, and the ratio thus obtained is used as the bus operation rate.

The bus operation rate determination unit 243 has set therein an upper-limit threshold and a lower-limit threshold, and compares the bus operation rate with the upper-limit threshold and the lower-limit threshold, to thereby determine the increase and decrease of the clock frequency.

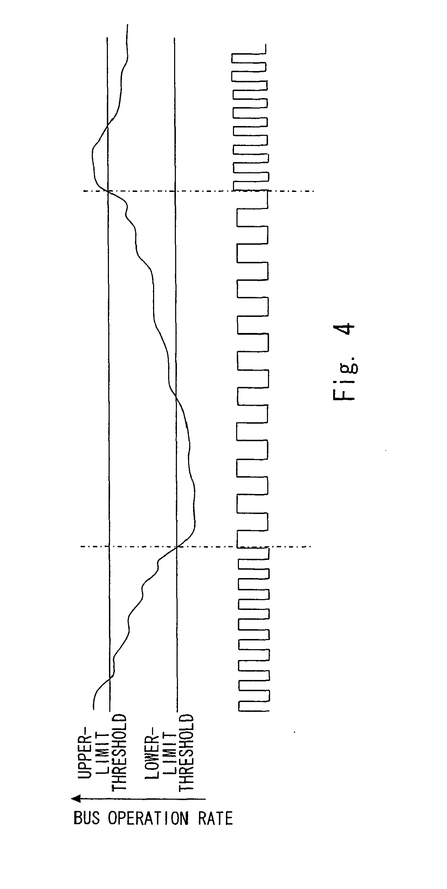

Fig. 4 is a timing diagram showing a relationship between the bus operation rate and the clock frequency.

When the active rate falls below the lower-limit threshold, a switching control signal for decreasing the clock frequency to a divided-by-2 frequency is output to the clock output unit 210.

Further, when the active rate exceeds the upper-limit threshold, a switching signal for increasing the clock frequency to a divided-by-1 frequency, namely, setting the clock frequency to the fastest frequency.

The polling state determination unit 244 monitors the address bus of the bus 116 to detect a module in a polling state, and compares the detected module with the predetermined condition, thereby controlling the clock frequency to be increased or decreased.

The polling state determination unit 244 monitors an address signal from the address bus. When the same address is output a predetermined number of times (e.g., three times) in succession, the polling state determination unit 244 determines that the module has entered the polling state.

The CPU 111 and the DSP 112 are herein described as examples of polling monitoring targets. When determining that both the CPU 111 and the DSP 112 have entered the polling state, the polling state determination unit 244 supplies the clock output unit 210 with a control signal for decreasing the clock frequency to a divided-by-2 frequency.

Further, when one of the CPU 111 and the DSP 112 has entered the polling state, the polling state determination unit 244 determines whether the other of the CPU 111 and the DSP 112 is in a stand-by state. Then, when the other of the CPU 111 and the DSP 112 is in the stand-by state, the polling state determination unit 244 supplies the clock output unit 210 with a control signal for dividing the clock frequency by 2.

Note that even in the case where one of the CPU 111 and the DSP 112 has entered the polling state, if the other thereof is not in the stand-by state but is active, the clock frequency is restored to the fast frequency.

A description is given of the operation of the clock supply device having the configuration described above.

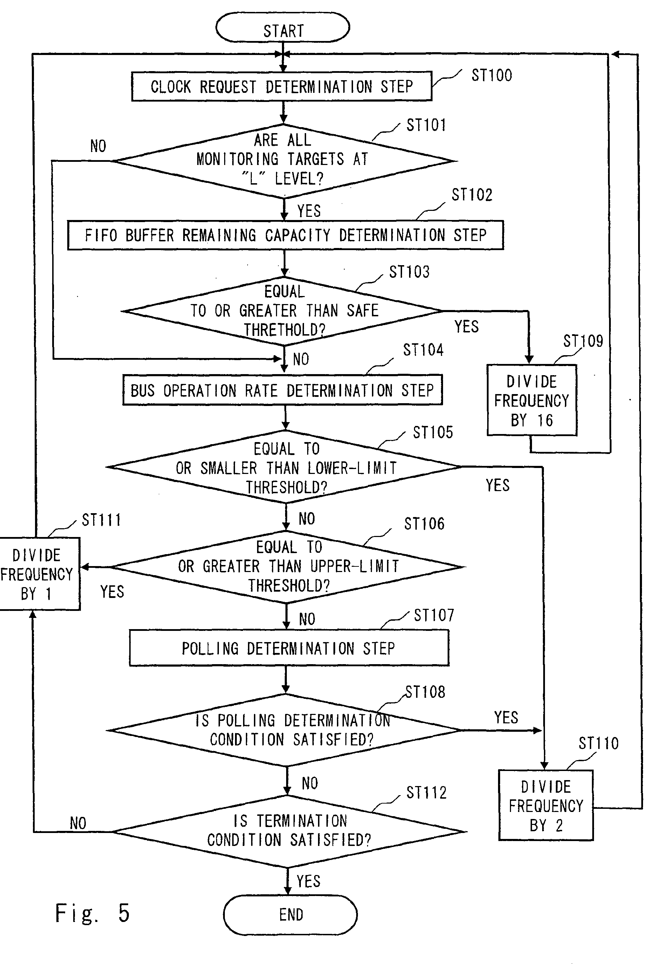

Fig. 5 is a flowchart showing an operation procedure of a clock frequency control method carried out by the clock supply unit 200.

First, it is assumed that the clock having the fastest frequency (i.e., divided-by-1 frequency from PLL) is output from the clock output unit 210.

Then, in ST100, a clock request determination step is carried out.

In the clock request determination step, the clock request pattern determination unit 241 compares the presence or absence of the clock request from each of the modules (111 to 115) with the condition set in the condition setting register 241A, and determines whether all the clock request signals from the monitoring target modules are at "L" level.

When it is determined that all the clock request signals from the monitoring target modules are at "L" level (YES in ST101), the FIFO buffer remaining capacity determination unit 242 then carries out a FIFO buffer remaining capacity determination step (ST102).

In the FIFO buffer remaining capacity determination step (ST102), the FIFO buffer remaining capacity of the FIFO type module (e.g., GDC) to be monitored is compared with a safety threshold.

Then, when the FIFO buffer remaining capacity is equal to or greater than the safety threshold (YES in ST103), all the clock request signals from the monitoring target modules are at "L" level, and the FIFO buffer remaining capacity is within the safe zone. Accordingly, a control signal for dividing the clock frequency by 16 is supplied to the clock output unit 210 (ST109).

After the clock frequency is divided by 16 to obtain the slowest frequency in ST109, the process returns to ST100 to repeat the loop. When the conditions of both the clock request determination step (ST100) and the FIFO buffer remaining capacity determination step (ST102) are satisfied (YES in ST101 and ST103), the divided-by-16 clock, i.e., the lowest-speed clock is continuously supplied.

When the predetermined condition of the clock request determination step (ST100) or the FIFO buffer remaining capacity determination step (ST102) is not satisfied (NO in ST101 or ST103), it is necessary to increase the clock frequency.

Then, the process is shifted to a bus operation rate determination step (ST104) to be carried out by the bus operation rate determination unit 243.

In the bus operation rate determination step (ST104), the bus operation rate is measured based on the active time of the DRAM 115 per unit time, and the bus operation rate is compared with the threshold (lower-limit threshold, upper-limit threshold).

Then, when the bus operation rate is equal to or lower than the lower-limit threshold, a control signal for dividing the clock frequency by 2 is supplied to the clock output unit 210 (ST110).

In this case, the predetermined condition of the clock request determination step (ST100) or the FIFO buffer remaining capacity determination step (ST102) is not satisfied (NO in ST101 and ST103). However, it can be determined that the load on the system 100 is moderate in view of the amount of data transmitted through the bus 116. Thus, the clock frequency is divided by 2 to obtain a medium-speed frequency.

As a result, unnecessary high-speed operation is eliminated, and unnecessary power consumption is reduced while necessary task processing is continued well.

Meanwhile, when the bus operation rate is equal to or greater than the upper-limit threshold, a control signal for dividing the clock frequency by 1 is supplied to the clock output unit 210 (ST111). That is, the clock frequency is increased.

For example, when the clock frequency is divided by 16 to obtain the slowest frequency or when the clock frequency is divided by 2 to obtain the medium-speed frequency, the flow of the task processing of each module is interrupted and a large number of modules access the DRAM 115 without interruption, which results in an increase in bus operation rate.

Accordingly, when the bus operation rate is equal to or greater than the upper-limit threshold, the clock frequency is increased to the fastest frequency.

As described above, when the load on the system 100 is high, the clock frequency is increased to thereby cause the operation execution unit 110 to rapidly execute the necessary processing at necessary timing.

In the bus operation rate determination step (ST104), when the bus operation rate falls between the upper-limit threshold and the lower-limit threshold (NO in ST105 and ST106), the clock frequency is maintained as it is, and then a polling determination step (ST107) is carried out.

In the polling determination step (ST107), an address signal from an address bus is monitored to determine whether a monitoring target module (e.g., CPU, DSP) that is outputting the same address a predetermined number of times (e.g., three times) in succession is present.

Then, when a monitoring target module that has entered the polling state is present in the monitoring target modules, it is determined whether the other monitoring target modules are in the polling state or in the stand-by state.

When it is determined that the other monitoring target modules are in the polling state or in the stand-by state (YES in ST108), a control signal for dividing the clock frequency by 2 is supplied to the clock output unit 210 (ST110).

It can be determined that the load on the system 100 is not so high, based on the fact that the module that has entered the polling state is present. Thus, the clock frequency is divided by 2 to obtain the medium-speed frequency.

As a result, unnecessary high-speed operation is eliminated, and unnecessary power consumption is reduced while necessary task processing is continued well.

Meanwhile, when it is determined that the module has entered the polling state or that the other monitoring target modules are executing processing (NO in ST108), the clock frequency is restored to the divided-by-1 frequency, i.e., the fastest frequency.

Then, the process returns to ST100 to repeat the loop until a termination condition (ST112) is satisfied. Note that the termination condition is satisfied when an instruction for stopping the system is input, for example.

According to the first exemplary embodiment having the above-mentioned configuration, the following advantageous effects can be obtained.
(1) In this exemplary embodiment, the determination steps ST100 and ST102 are carried out, and the pattern of the clock request from each monitoring target module and the FIFO buffer remaining capacity are determined. Further, the configuration is adopted in which the frequency of the clock from the clock output unit 210 is decreased to the slowest frequency, and the frequencies of the whole clocks to be supplied to the operation execution unit 110 are decreased, based on the determination results.
   In the determination steps ST100 and ST102, when it is determined that no monitoring target module is outputting the clock request and that the FIFO buffer remaining capacity is sufficient, it can be determined that no high-speed processing is required for the entire system.
   In such a case, the clock frequency is divided by 16 to obtain the slowest frequency and the duty cycle of the system 100 is decreased, to thereby eliminate unnecessary high-speed operation. This results in a reduction in power overhead and power consumption.
   If the clock ON/OFF control is simply carried out, it is necessary to wait until the clock requests from all the modules constituting the system 100 become "L" level. Actually, there is little possibility that the clock requests from all the modules become "L" level, and such ON/OFF control is unavailable.
   Additionally, many modules such as an interrupt controller and the DMAC (direct memory access controller) 113 are required to constantly operate, and thus a clock should be constantly supplied to the modules.
   In this regard, modules suitable for determining the amount of load on the system 100 are selected and registered in the condition setting register 241A. When the clock request signals from the modules are at "L" level, the clock frequency is decreased to a slow frequency. Thus, the advantageous effect of reducing the unnecessary power consumption can be obtained while necessary task processing is continued well.
(2) In this exemplary embodiment, the condition setting register 241A is provided, and the condition setting register 241A enables the arbitrary selection and registration of the monitoring target for monitoring the presence or absence of the clock request. As a result, an optimum condition can be set depending on the system configuration of the operation execution unit 110, and the optimum clock frequency control can be implemented depending on the system 100.
(3) In the clock frequency switching control based on the presence or absence of the clock request, the granularity of the control is coarse. In this exemplary embodiment, the operational load of the system 100 is determined by monitoring the details of the condition such as the FIFO buffer remaining capacity, the bus operation rate, and the polling state, thereby achieving the clock frequency switching control with higher precision.
   The conventional method in which the clock frequency is simply increased or decreased according to the amount of load on the CPU 111 or the like has a coarse granularity and lacks practical feasibility. While, in this exemplary embodiment, the clock frequency switching control can be achieved with higher precision, and unnecessary power consumption can be reduced.
(4) In this exemplary embodiment, the bus operation rate is measured, and the bus operation rate thus obtained is used for the clock frequency control.
   Further, in the case of measuring the bus operation rate, it is assumed that the operation rate of the bus 116 is obtained based on the active time of the DRAM 115 per unit time.
   The modules mounted in the operation execution unit 110 operate while exchanging data with the DRAM 115. Accordingly, the method of measuring the amount of data to be output from the DRAM 115 is effective in estimating the operation rate of the bus 116 (i.e., an amount of traffic on the bus). Thus, the clock frequency control can be achieved practically and specifically.
(5) In this exemplary embodiment, the polling state is determined, and the determination results are used for the clock frequency control.
   When a module in the polling state is present, the module is not executing processing for a specific task. In this case, however, the module is executing a so-called polling operation, and thus the clock request therefrom is at "H" level, and a signal such as address data is output to the bus 116. Accordingly, the reduction in power consumption depending on the polling state cannot be achieved based only on the clock request or the bus operation rate.
   Meanwhile, in this exemplary embodiment, the polling state determination unit 244 is provided to determine the polling state of each module, and the determination results are used for the clock frequency control. Thus, the clock frequency control can be achieved practically and specifically, and power consumption can be further reduced compared to the related art.

### (First modification)

Next, a first modification of the present invention will be described.

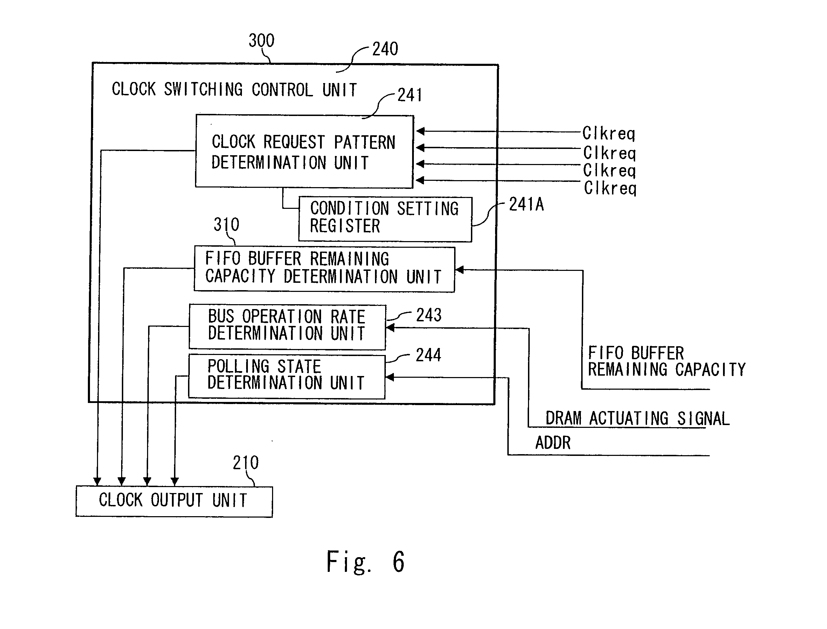

Fig. 6 is a diagram showing the configuration of the first modification.

In the first exemplary embodiment, a description has been made of the case where the determination results of each of the clock request pattern determination unit 241 and the FIFO buffer remaining capacity determination unit 242 are determined under the AND condition, and when both conditions are satisfied, the clock frequency is divided by 16. However, the determination results of the clock request pattern determination unit 241 and a FIFO buffer remaining capacity determining unit 310 are not necessarily determined under the AND condition as shown in Fig. 6.

Referring to Fig. 6, each of the clock request pattern determination unit 241 and the FIFO buffer remaining capacity determining unit 310 supplies a control signal to the clock output unit 210 without involving any AND circuit.

Additionally, the FIFO buffer remaining capacity determining unit 310 has not only the safety threshold but also a risk threshold set therein.

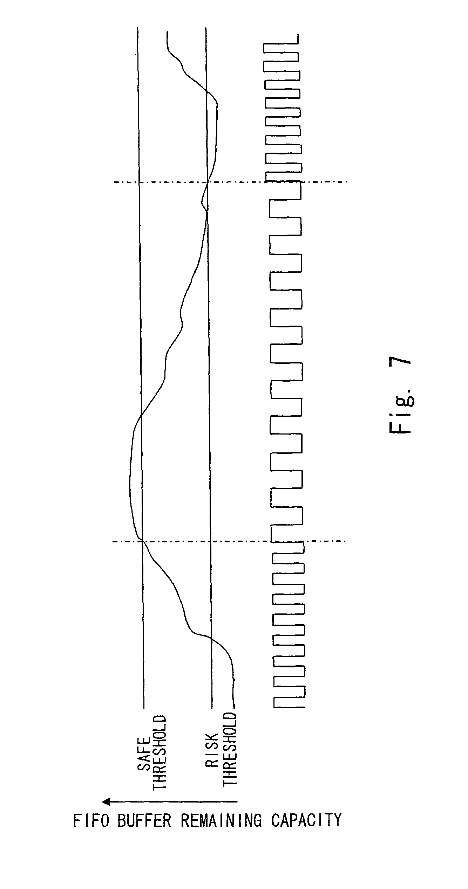

Fig. 7 is a timing diagram showing a relationship between the FIFO buffer remaining capacity and the clock frequency.

When the FIFO buffer remaining capacity is equal to or smaller than the risk threshold, a switching control signal for dividing the clock frequency by 1 is supplied to the clock output unit 210. That is, the switching signal for increasing the clock frequency to the fastest frequency is output.

Further, when the FIFO buffer remaining capacity is equal to or greater than the safety threshold, the clock frequency is divided by 2.

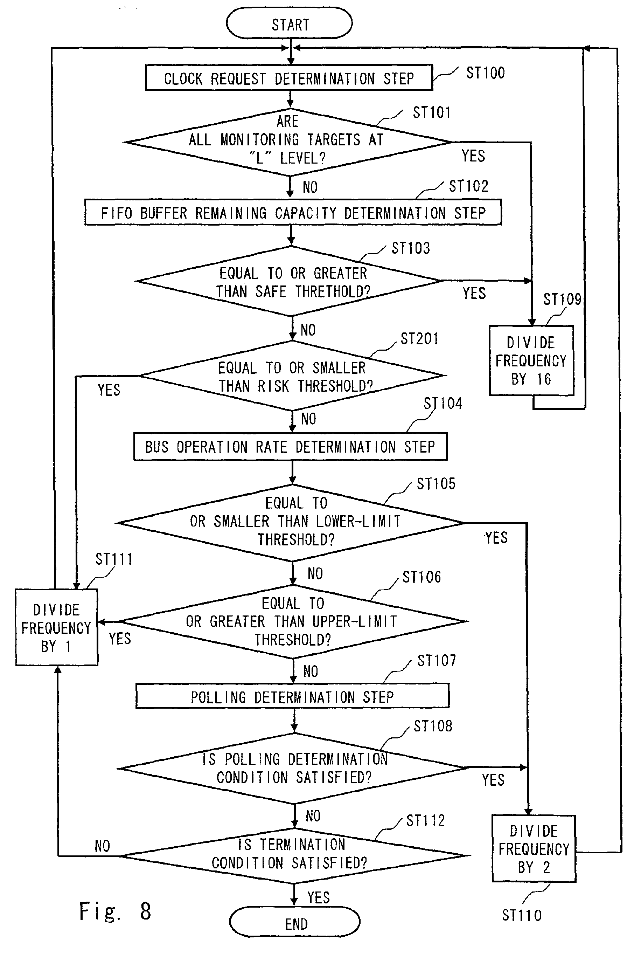

Fig. 8 is a flowchart showing an operation procedure of the first modification.

Referring to Fig. 8, when it is determined that all the clock request signals from the modules of the monitoring targets are at "L" level in the clock request determination step (ST100) (YES in ST101), the clock request pattern determination unit 241 supplies the clock output unit 210 with a control signal for dividing the clock frequency by 16.

In ST101, when it is determined that all the clock requests from the monitoring target modules are not at "L" level and the condition of ST101 is not satisfied, the flow advances to processing for restoring the clock frequency to the fast frequency.

Specifically, the FIFO buffer remaining capacity determination step (ST102) is carried out, and the FIFO buffer remaining capacity of the FIFO type module (e.g., GDC) to be monitored is compared with the safety threshold and the risk threshold.

Then, when the FIFO buffer remaining capacity is equal to or smaller than the risk threshold, the clock frequency is divided by 1.

Note that the other steps shown in Fig. 8 are similar to those of the operation described in Fig. 5.

The present invention is not limited to the above exemplary embodiments, and various modifications can be made without departing from the scope of the present invention.

In the above exemplary embodiments, the bus operation rate is estimated based on the active time of the DRAM, but the method of estimating the bus operation rate is not limited thereto and other methods capable of estimating the bus operation rate (i.e., an amount of traffic on the bus) may be employed.

In the above exemplary embodiments, a description has been made of the case where the clock output unit outputs not only the highest-speed clock from the PLL but also the divided-by-16 clock, i.e., the lowest-speed clock, and the divided-by-2 clock, i.e., the medium-speed clock. Alternatively, the frequency dividing rate of the frequency division unit may be divided into more detailed levels.

Moreover, the threshold is broken down into multiple levels, and the multiple levels of thresholds may be set in each of the FIFO buffer remaining capacity determination unit and the bus operation rate determination unit. Furthermore, the clock frequency may be selected at more detailed levels corresponding to the thresholds.

Though Fig. 3 illustrates the operation of a synchronous DRAM as an example of a DRAM operation, the protocol for reading out data from the DRAM, such as a random access mode or a fast page mode, varies depending on the DRAM from which data is read out.

While the invention has been described in terms of several exemplary embodiments, those skilled in the art will recognize that the invention can be practiced with various modifications within the spirit and scope of the appended claims and the invention is not limited to the examples described above.

Further, the scope of the claims is not limited by the exemplary embodiments described above.

Furthermore, it is noted that, Applicant's intent is to encompass equivalents of all claim elements, even if amended later during prosecution.

## Claims

1. A clock supply device that supplies a clock to a plurality of modules, **characterized in that**
the clock supply device comprises:
a clock output unit (210) that switches between clocks having different frequencies and outputs the clocks;
a clock distribution unit (220) that distributes and supplies the clocks from the clock output unit (210) to the plurality of modules; and
a clock switching control unit (240) that causes the frequencies of the clocks from the clock output unit (210) to be switched, and
the clock switching control unit (240) comprises a clock request pattern determination unit (241) that outputs a control signal for decreasing a clock frequency to a slow frequency, to the clock output unit (210), when a pattern of a clock request signal output from a monitoring target module selected as a monitoring target from among the plurality of modules satisfies a predetermined condition pattern.

2. The clock supply device according to Claim 1, wherein the clock request pattern determination unit (241) has registered therein in advance identification codes of the plurality of modules, and comprises a condition setting register (241A) capable of arbitrarily selecting and registering modules to be monitored.

3. The clock supply device according to Claim 2, wherein the clock request pattern determination unit (241) outputs a control signal for decreasing the clock frequency to a slow frequency, to the clock output unit (210), when all the clock request signals from monitoring target modules selected and registered in the condition setting register (241A) become "L" level.

4. The clock supply device according to any one of Claims 1 to 3, wherein
the plurality of modules includes a FIFO module of FIFO type that processes tasks in order from the top,
the clock switching control unit (240) comprises a FIFO buffer remaining capacity determination unit (242) that causes the clock output unit (210) to switch the clock frequency according to a buffer remaining capacity of the FIFO module, and
the FIFO buffer remaining capacity determination unit (242) outputs a control signal for decreasing the clock frequency to a slow frequency, to the clock output unit (210), when the buffer remaining capacity of the FIFO module is equal to or greater than a predetermined safety threshold set in advance.

5. The clock supply device according to Claim 4, wherein the control signal from the clock request pattern determination unit (241) and the control signal from the FIFO buffer remaining capacity determination unit (242) are supplied to the clock output unit (210) under an AND condition.

6. The clock supply device according to Claim 4, wherein the FIFO buffer remaining capacity determination unit (242) has a predetermined risk threshold set therein in advance, and outputs a control signal for increasing the clock frequency to a fast frequency, to the clock output unit (210), when the buffer remaining capacity of the FIFO module is equal to or smaller than the risk threshold.

7. The clock supply device according to any one of Claims 1 to 6, wherein the clock switching control unit (240) comprises a bus operation rate determination unit (243) that causes the clock output unit (210) to switch the clock frequency according to an operation rate of a bus per unit time.

8. The clock supply device according to Claim 7, wherein the bus operation rate determination unit (243) obtains the bus operation rate based on an active time of a DRAM per unit time.

9. The clock supply device according to any one of Claims 1 to 8, wherein
the plurality of modules includes modules that cooperate with each other using a polling system, and
the clock switching control unit (240) comprises a polling state determination unit (244) that outputs a control signal for decreasing the clock frequency to a slow frequency, to the clock output unit (210), upon determining and detecting a module in a polling state.

10. The clock supply device according to Claim 9, wherein the polling state determination unit (244) monitors a bus, and determines that the module is in the polling state when access is made to the same address a predetermined number of times in succession.

11. The clock supply device according to Claim 9 or 10, wherein
the polling state determination unit (244) includes a plurality of polling monitoring targets set therein,
when any one of the monitoring target modules is in the polling state, the polling state determination unit (244) confirms states of other monitoring targets, and
when the other monitoring targets are in a stand-by state, the polling state determination unit (244) outputs a control signal for decreasing the clock frequency to a slow frequency, to the clock output unit (210).
